# EUROPEAN PATENT APPLICATION

(11) **EP 3 331 248 A1**
(43) Date of publication of application: **06.06.2018**
(21) Application number: 16306580.8
(22) Date of filing: 30.11.2016
(51) Int. Cl.: H04N 21/443, H04N 5/63

(54) **SMART STANDBY WITH MULTIPLE DEVICES**

(71) Applicant: Thomson Licensing, 92130 Issy-les-Moulineaux (FR)
(72) Inventor: ELUARD, Marc, 35576 Cesson-Sévigné (FR); JEANNE, Ludovic, 35576 Cesson-Sévigné (FR); LE BOLZER, Françoise, 35576 Cesson-Sévigné (FR); NEUMANN, Christoph, 35576 Cesson-Sévigné (FR)
(74) Representative: Huchet, Anne

(57) **Abstract**

A method and apparatus for reducing energy consumption of devices is provided. In one embodiment, the method comprises at least one audio visual device connected via HDMI to a processor. The processor monitors via the processor any user initiated activity associated with said audio visual device and establishes an activity queue for the user initiated activity for the device. The processor also initiates a standby mode for said device when a period of inactivity has exceeded a threshold value.

## Description

### TECHNICAL FIELD

The present invention relates generally to audio and video interface devices and more particularly to High Definition Multimedia Interface (HDMI) devices having standby mode options.

### BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

There has been much focus on reducing energy consumption. The reasons behind this attention is varied and range from simple cost savings considerations to resolving environmental issues like greenhouse gas emissions. Energy efficiency has also become part of a global sustainable energy policy. This focus has in turn led to a surge in development of energy efficient devices.

The goal of providing efficient devices is not only to reduce the amount of energy required to provide products and services but also to do so without affecting the quality. This poses certain challenges. For one, energy savings can only lead to immediate financial gains if the savings offset any additional costs of implementing an energy efficient technology. Another problem is that switching between energy efficient mode and regular device functioning mode, can at times lead to interruption of regular device operation when the device resumes regular operation. Device recovery can be especially problematic in areas where digital data can be compromised. Consequently, there is a need for improving energy efficiency of consumer devices without affecting their performance and while controlling their cost effectiveness.

### SUMMARY

Additional features and advantages are realized through the techniques of the present invention. Other embodiments and aspects of the invention are described in detail herein and are considered a part of the claimed invention. For a better understanding of the invention with advantages and features, refer to the description and to the drawings.

A method and apparatus for reducing energy consumption of devices is provided. In one embodiment, the method comprises at least one audio visual device connected for example via HDMI to a processor. The processor monitors via the processor any user initiated activity associated with said audio visual device and establishes an activity queue for the user initiated activity for the device. The processor also initiates a standby mode for said device when a period of inactivity has exceeded a threshold value. The monitoring may be continuous.

In an embodiment, said standby mode is initiated after a delay once after said inactivity threshold value has been exceeded.

In an embodiment, wherein a plurality of audio visual devices are connected via said HDMI to said processor, further comprising detecting via said processor any user initiated activity associated with any of said plurality of audio visual devices.

In an embodiment said processor monitors each of said devices for last user initiated activity in order to determine if any of said devices has exceeded an inactivity threshold value.

In an embodiment said processor initiates a standby mode for any of said plurality of devices that exceeds said inactivity threshold period.

In an embodiment said standby mode is initiated after a delay after said inactivity threshold value has been exceeded.

In an embodiment said inactivity threshold value is determined independently for each device such that said inactivity threshold value can be different or the same amongst said devices.

In an embodiment said inactivity threshold value is determined by using a counter and said counter is reset every time an activity is detected.

In an embodiment said processor is a server computer.

In an embodiment the method further comprises or the device is further configured for generating an activity queue for any and each audio visual device monitored by said processor.

In an embodiment said activity queue(s) are stored and at least periodically updated to capture any new activity.

In an embodiment the method further comprises or the device is further configured for: determining user preferences according to each generated queue of each device.

In an embodiment the method further comprises or the device is further configured for: adjusting at least one user default option according to past user preferences according to said generated device queue(s).

In an embodiment, the processor is connected to the at least one audio visual device via a HDMI connection.

Another aspect of the invention provides a system for controlling energy consumption of a device, comprising:
a plurality of audio visual devices connected via an HDMI for example
a processor connected for example via said HDMI to said devices and configured to perform:
   monitoring any user initiated activity associated with any of said audio visual devices;
   establishing an activity queue for each user initiated activity for any of said devices;
   continuously monitoring inactivity periods for each device and initiating a standby mode for any said device when a period of inactivity has exceeded a threshold value.

### BRIEF DESCRIPTION OF THE DRAWINGS

The invention will be better understood and illustrated by means of the following embodiment and execution examples, in no way limitative, with reference to the appended figures on which:
Figure 1 is a block diagram depiction of an environment using one or more High-Definition Multimedia Interface (HDMI) compliant devices in processing communication with one another according to one embodiment;
Figure 2 is a block diagram illustration of a bidirectional channel as used by a source and a sink to exchange, according to one embodiment;
Figure 3 is a block diagram providing more detailed information as per embodiment of Figure 2 that further describes the interaction between the HDMI transmitter and an HDMI receiver;
Figure 4 is a tabular illustration showing an HDMI and CEC pin ID table according to one embodiment;
Figures 5 to 7 are different illustration according to one embodiment showing next step activities for initiating a standby mode based on inactivity threshold values;
Figure 8 is a flow chart depiction according to embodiments of Figures 5-7; and
Figure 9 is a flow chart depiction according to one embodiment depicting user default option adjustments based on device activity.

Wherever possible, the same reference numerals will be used throughout the figures to refer to the same or like parts.

### DESCRIPTION

It is to be understood that the figures and descriptions of the present invention have been simplified to illustrate elements that are relevant for a clear understanding of the present invention, while eliminating, for purposes of clarity, many other elements found in typical digital multimedia content delivery methods and systems. However, because such elements are well known in the art, a detailed discussion of such elements is not provided herein. The disclosure herein is directed to all such variations and modifications known to those skilled in the art.

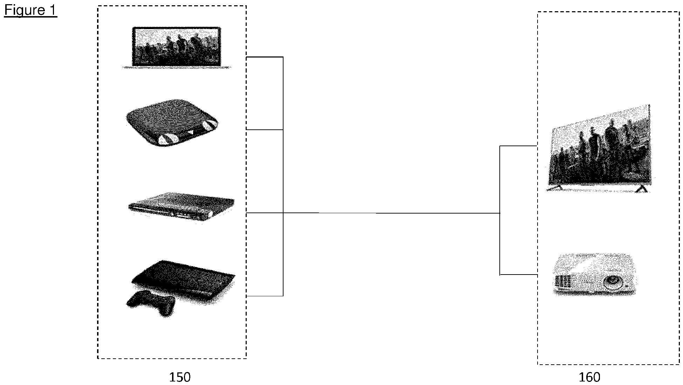

Figure 1 is a block diagram depiction of an environment using one or more High-Definition Multimedia Interface (HDMI) compliant devices in processing communication with one another. HDMI is an audio/video interface for transferring uncompressed video data and compressed or uncompressed digital audio data. The HDMI standard provides for a set of guidelines that help create high-bandwidth connections between digital devices. The connection can be from a source device such as a display controller to another HDMI complaint digital device such as a computer monitors, a video projector, a digital television or even a digital audio device.

HDMI can be used as an alternate digital replacement for analog video standards and provides many benefits such as supporting multiple channels at one time and cutting down number of cables required to connect components. HDMI implements the EIA/CEA-861 standards and require no signal conversions. HDMI also incorporates Consumer Electronics Control (CEC) which provides the capability for the HDMI devices to control each other when necessary. This further allows the users to operate multiple devices with one remote control handset, which provides another benefit.

In recent years, energy consumption has become critical and many devices have incorporated automatic standby policies to cut down on energy usage. Most standby policies are built around monitoring user activities. The activity is often tracked and monitored on a single device basis in most cases. For example, a television set may enter a standby status after a period of inactivity where the user has failed to enter any commands for a period of time. In modern devices, user commands are often performed by using a remote control. Therefore, in most instances standby policies are designed to monitor remote control activity in order to calculated usage of a corresponding device over time. There are a number of problems, however, with standby policies. Full recovery without affecting data integrity, however, is one important issue that has to be considered when handling standby status. Managing relationships among a variety of devices that need to work together, is yet another challenging issue.

The introduction of HDMI compliant devices have allowed for improvements in this area. HDMI compliant devices that are in communication with one another can be more easily controlled when it comes to energy savings. On the other hand, the complexity of being interconnected introduces other challenges when dealing with a network of HDMI compliant devices. For example, an HDMI system using CEC can broadcast a "System Standby" message to several devices simultaneously. However, any particular device, such as the television set of the previous example, will not have an automatic standby policy individually as previously available. In addition, The HDMI/CEC specification allows to pass through remote control functions such as functions that include power on and power off operations. However, this mechanism does not tackle the automatic standby policy, and does not capture other similar user activities (e.g. gamepad actions). Therefore, in this sense there are limitations with only having an explicit power-on/off function.

While there is no individualized standby policy on a device by device basis, the HDMI/CEC implements a "Give Power Status" message which enables a particular device to query the power status of another attached device. One of the possible returned message states can be "In transition on to standby" but this requirements are not triggered by the device (i.e. TV) that would need to enter the standby status. Therefore the only way for a device to avoid an automatic standby of the attached device (i.e. TV) is to continuously poll the state of it (TV). This is very different than the automatic individualized standby policy of the previous example.

Referring back to the HDMI environment 100 of Figure 1, several devices 150 are processed together to help consume both the content and energy considerations. Using the previous example, in one case the television and a set top box (STB) 160 can be grouped together at a first location such as a home. The user then can operate a remote control of the transmitter (here the STB) as opposed to the remote control of the recipient (here the TV) to manage both devices. Other devices 150 can also be grouped together and in one embodiment be located remotely.

In traditional environment using HDMI compliant devices, unfortunately, from the point of view of the recipient, in the example provided, the device used by the user will always be seen as inactive. Therefore, it is either necessary to perform an action on the receiver even if it is a non-sense for the user or to configure the receiver to be active. In an environment where a variety of devices are connected via several technologies such as HDMI, the interconnection can be used to allow devices to send commands to different devices. For example, it is possible to configure the TV (to which it sends commands) to turn off all devices as soon as the command is given by the user via the remote control. In one embodiment, the commands in the HDMI can be used and defined to further propagate the user activity information and resolve the challenge. In such a case, these commands will be transmitted using the HDMI/DDC channel.

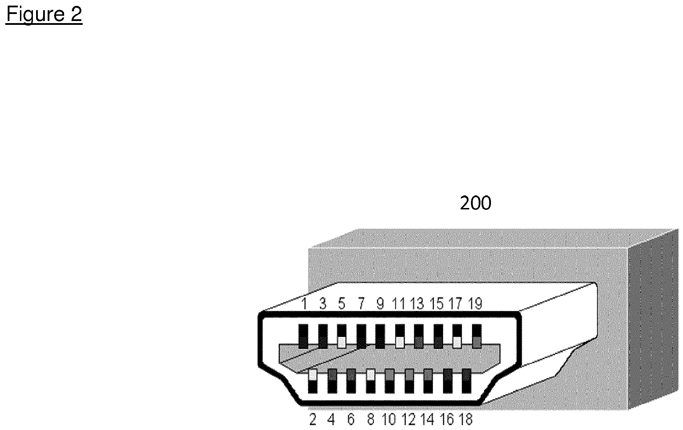

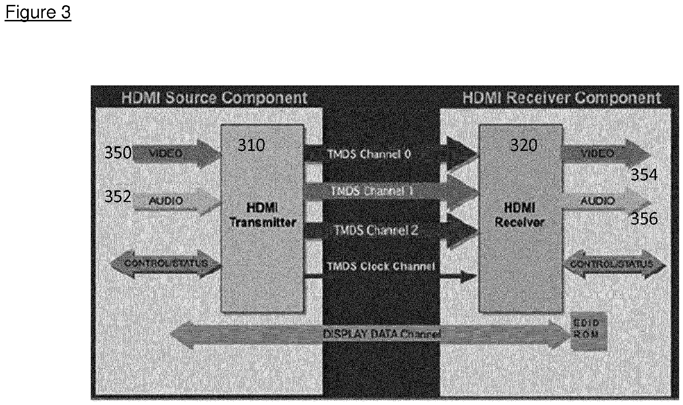

Figure 2 is an illustration of one embodiment. To aid understanding, Figure 2 shows a bidirectional channel (pin 13) CEC which is used by a source and a sink to exchange several types of information, or to remotely control a connected device. Figure 3 provides for a more detailed block diagram that describes the interaction between the HDMI transmitter and HDMI receiver.

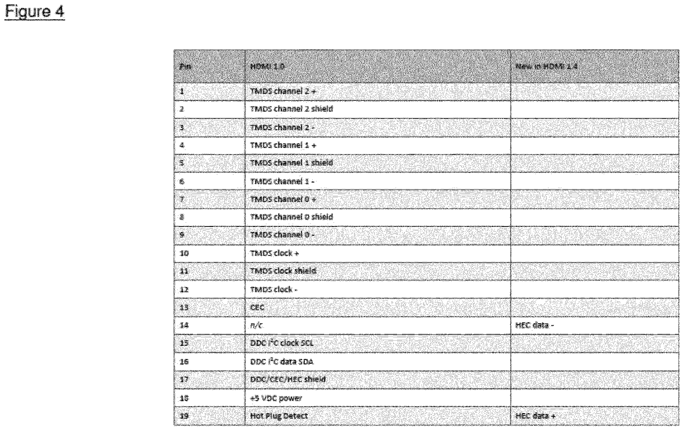

Figure 4 provides an illustration showing a sample HDMI and CEC pin ID table. The table is to help establish the correlation between the relationship of Figures 2 and 3 more clearly. In this example, the CEC is used for generating a large set of commands as per the HDMI standard. In one embodiment, this can be used to create new CEC commands regarding the strategy desired such as energy conservative strategies. Two main strategies can be defined in this respect.

In a first strategy, in one embodiment, an active queue can be established on the user's activity end. In a second strategy, in another embodiment, a way to check the user's activity can be established at the instant when an automatic standby signal status is enacted. Considering these two strategies, in one embodiment, a method is used that can verify the activity status of the devices. In such a case an "Active queue" command and related functions will established and set up. This will allow this new command to have correlated function that detects the different types of activity (i.e. <activity_detected> command). This command, in one embodiment, is transmitted by any device which detects an activity by the user to report to all other devices. For example, when the user changes the volume on the STB or when he presses a button on a gamepad. When a device receives this command it can reset the standby timer (If a device don't known this command, its comportment is not altered.) In this way, the activity or lack of activity that will ultimately affect the standby status can be managed.

In another embodiment, a different command can also be established that can work independently or with the first command to "Verify" any particular activity (i.e. the command <activity_detected>). The command can be defined in one embodiment in conjunction with the "Active" queue strategy.

In yet another embodiment, another new command can be introduced that allows for the start of an activity to be identified. In one embodiment, a delay parameter can also be associated with this new command (i.e. <request_activity> with a delay as parameter). In this way, in one embodiment, if no activity is detected before the end of this delay, the device will enter a standby mode.

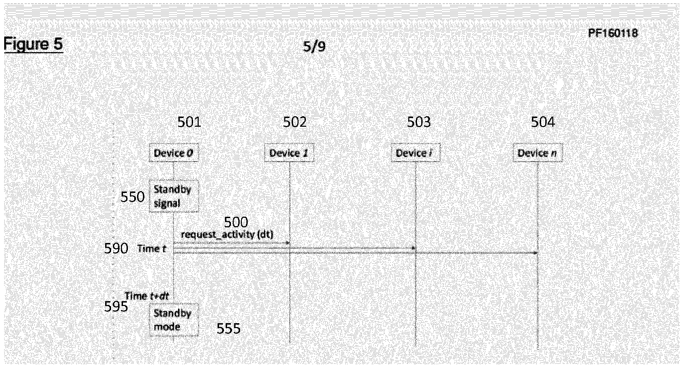

Figures 5 to 7 are different illustration of one embodiment using the activity commands as discussed above and their associated methodology and technique. It should be noted that a threshold can be established for each device to establish a period of inactivity. Each device can have a threshold value that is independent and therefore the same or different values can be present for different devices. When a delay is being instituted, the delays can also be the same or different amongst the devices as the delay can also be established independently.

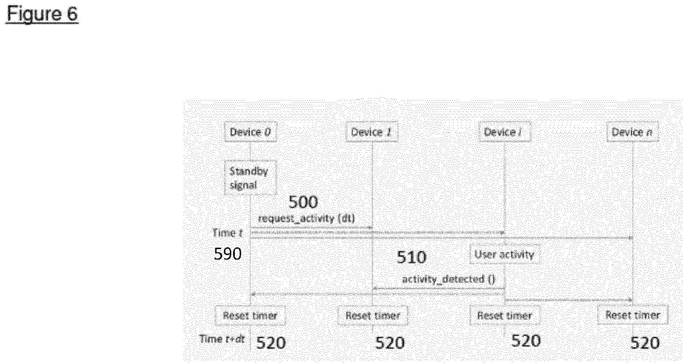

Referring back to Figures 5 when a device is about to enter the standby mode, it sends a <request_activity> command 500 with a delay (dt) as a parameter to all other devices. In one embodiment an initialization period can be performed to provide for device discovery. In another embodiment, devices are automatically registered as available when they become part of a system or network. This can be performed at the request of the user or automatically due to device activity monitoring. When a device detects a user's activity before the end of the delay, it sends an <activity_detected> 510 command to all devices. The latter is shown using the illustration of Figure 6.

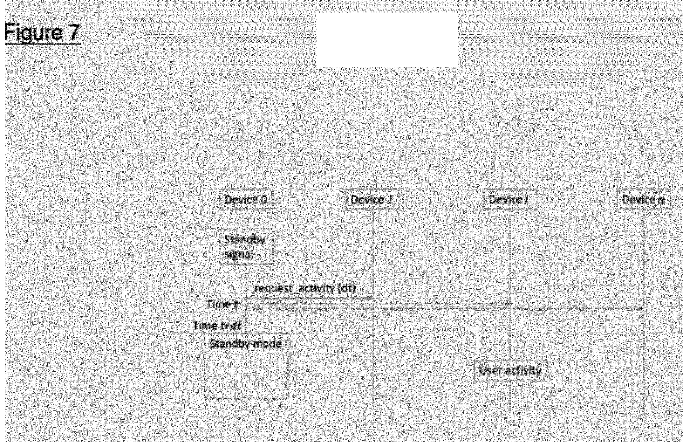

In Figure 6, when a device receives an <activity_detected> command, it resets its standby timer 520. If the device cannot ascertain the status of these known commands, in one embodiment, a default mode is set up that allows it not to alter any device status. However, if no activities are detected and the device timer is not reset, then the device goes in the standby mode after a particular time has passed the delay threshold (time *t+dt*) as shown in Figure 7. The threshold can be selectively set and altered, in one environment such as by another device or user.

In some cases, it may be that an activity is actually detected after the delay threshold. In such a case, in one embodiment, the device which have detected activity will not send any commands. In one embodiment, the delay threshold may actually be adjusted automatically so that when a device have received multiple <request_activity> command, it keeps the longest delay threshold and adjust the delay threshold accordingly.

In one embodiment, it is possible for a multi device system or network to have several devices with several types of connection (eg HDMI and WiFi). It is also possible for this device to respond with an <activity_detected> on HDMI link (for a device with activity on another 'network' - VOIP Phone or WiFi tablet).

In one embodiment, the system is operated with no expected standby. The Standby mechanism can be based on user's activity regardless of the device or the activity. Consequently, there will be no impact on comportment of non-compliant devices and this can be used in conjunction with any potentially add-on commands as later introduced to the HDMI standard commands. As can be appreciated by those skilled in the art, the embodiment can also be used with other than HDMI devices.

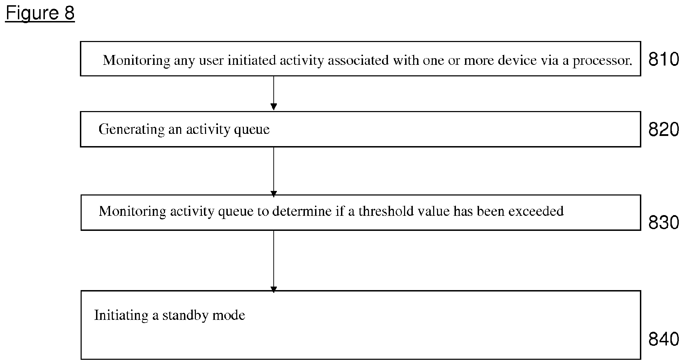

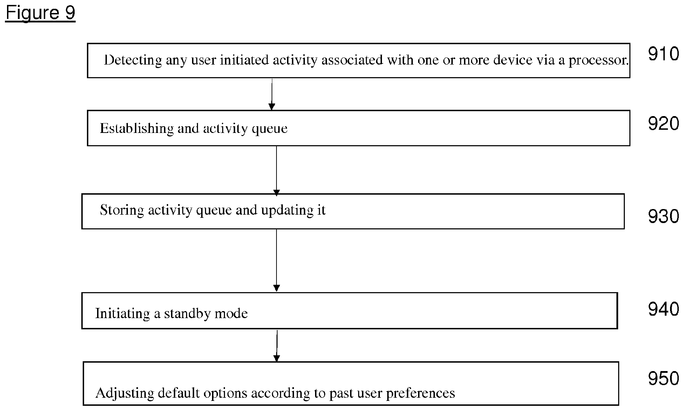

Figures 8 and 9 provide different flow diagrams according to an embodiment. In Figure 8, a method for conserving energy by controlling one or more a plurality of audio visual devices connected via HDMI to a processor or computer is provided as per one embodiment. In step 810 a processor or computer detects a user initiated activity associated with any of one or a plurality of the audio visual devices and generates an activity queue in step 820 for each device. In step 830, the activity is monitored for any and each device to determine if an inactivity threshold value has been exceeded. As shown in step 840, when the threshold has been exceeded, a standby mode is initiated for that particular device, and in one embodiment the standby mode may be initiated after a delay.

In Figure 9, the flow diagram shows a method of conserving energy by controlling one or a plurality of audio visual devices connected via HDMI to a processor. In step 910, the processor detects any user initiated activity associated with any of the plurality of audio visual devices and generating an activity queue for each of the audio visual devices as shown in step 920. In step 930, the queue relating to each device is stored and at least periodically updated to capture any new activities. In step 940, the processor initiates a standby mode. In one embodiment, user preferences may also be determined (not illustrated) according to each generated queue and in step 950 any user default options (selections) are adjusted and altered according to past user preferences according to the generated device queues.

While some embodiments has been described, it will be understood that those skilled in the art, both now and in the future, may make various improvements and enhancements which fall within the scope of the claims which follow. These claims should be construed to maintain the proper protection for the invention first described.

## Claims

1. A method of reducing energy consumption by controlling at least one audio visual device comprising:
monitoring (810) via a processor any user initiated activity associated with said audio visual device;
said processor establishing an activity queue (820) for user initiated activity for said device;
monitoring (830) said audio visual device and initiating (840) a standby mode for said audio visual device when a period of inactivity has exceeded a threshold value.

2. A device for controlling energy consumption of at least one device, comprising:
a processor connected to at least one audio visual device (150) and configured to perform:
monitoring (910) any user initiated activity associated with any of said audio visual devices;
establishing (920) an activity queue for each user initiated activity for any of said devices;
monitoring inactivity periods for each device and initiating a standby (940) mode for any of said device when a period of inactivity has exceeded a threshold value.

3. The method of claim 1, or the device of claim 2, wherein said standby mode is initiated after a delay (520) once after said inactivity threshold value (500) has been exceeded.

4. The method of claim 1 or 3 or the device of claim 2 or 3 wherein a plurality of audio visual devices are connected via said HDMI to said processor, further comprising detecting via said processor any user initiated activity associated with any of said plurality of audio visual devices (910).

5. The method of claim 4, or the device of claim 4 wherein said processor monitors each of said devices for last user initiated activity in order to determine if any of said devices has exceeded an inactivity threshold value (500).

6. The method of claim 5, or the device of claim 5, wherein said processor initiates a standby mode for any of said plurality of devices that exceeds said inactivity threshold period.

7. The method of claim 5, or the device of claim 5 wherein said standby mode (555) is initiated after a delay after said inactivity threshold value has been exceeded.

8. The method of claim 6, or the device of claim 6 wherein said inactivity threshold value is determined independently for each device such that said inactivity threshold value can be different or the same amongst said devices.

9. The method of claim 1 or 6, or the device of claim 2 or 6 wherein said inactivity threshold value is determined by using a counter and said counter is reset every time an activity is detected.

10. The method of claims 1 or 6 or the device of claim 2 or 6 further comprising:
generating an activity queue for any and each audio visual device monitored by said processor.

11. The method of claim 10, or the device of claim 10 wherein said activity queue(s) are stored and at least periodically updated to capture any new activity.

12. The method of claim 10 or 11, or the device of claim 10 or 11 further determining user preferences according to each generated queue of each device.

13. The method or the device of claim 12, further adjusting at least one user default option according to past user preferences according to said generated device queue(s).

14. The method of any one of claims 1 and 3 to 13, or the device of any one of claims 3 to 13 wherein the processor is connected to the at least one audio visual device via a HDMI connection.

15. A system for controlling energy consumption of a device, comprising:
a plurality of audio visual devices (150)
a device according to any one of claims 2 to 14 connected to said devices.
